# DEMANDE DE BREVET EUROPEEN

(11) **EP 0 861 008 A1**
(43) Date de publication de la demande: **26.08.1998**
(21) Numéro de dépôt: 98200409.5
(22) Date de dépôt: 10.02.1998
(51) Int. Cl.: H04Q 7/32, H04B 1/38

(54) **Appareil de télécommunication muni d'un dispositif de reconnaissance de périphériques**

(30) Priorité: 25.02.1997 FR 9702224
(71) Demandeur: Koninklijke Philips Electronics N.V., 5621 BA Eindhoven (NL)
(72) Inventeur: Poirel, Alain Yvan René, 75008 Paris (FR)
(74) Mandataire: Chaffraix, Jean

(57) **Abrégé**

L'invention concerne un appareil principal doté de bornes d'alimentation pour alimenter un appareil périphérique et d'un dispositif de reconnaissance pour reconnaître différents types de périphériques par simple connexion dudit périphérique entre lesdites bornes et pour sélectionner une tension d'alimentation en fonction de l'impédance dudit périphérique vue entre ces bornes.

## Description

L'invention concerne un appareil de télécommunication doté de bornes d'alimentation pour alimenter un périphérique ayant une signature électrique et d'un dispositif de reconnaissance pour reconnaître un périphérique connecté entre lesdites bornes.

L'invention concerne également tout autre appareil doté de bornes d'alimentation pour alimenter un périphérique ayant une signature électrique et d'un dispositif de reconnaissance pour reconnaître un périphérique connecté entre lesdites bornes.

Les accessoires ou périphériques de téléphones portables disponibles actuellement dans le commerce pour différentes applications spécifiques (kit mains libres, ordinateur portable, fax, etc.) ne fonctionnent pas tous avec la même tension d'alimentation. Certains de ces accessoires sont d'ailleurs adaptés à un modèle de téléphone ou à un constructeur particulier. Pour alimenter correctement ces différents périphériques, l'appareil principal est alors doté d'un connecteur à plusieurs broches dont une broche d'alimentation, une broche de masse et autant de broches dédiées qu'il existe de périphériques susceptibles d'être connectés audit appareil. En effet, il est indispensable d'identifier ces accessoires lors de leur connexion à l'aide d'une broche d'identification spécifique pour éviter de leur délivrer une tension inadaptée et risquer de les endommager.

Un appareil comportant un dispositif d' identification permettant d'identifier différents types de batteries à l'aide d'une unique broche d'identification est déjà connu. Il fonctionne avec des batteries d'alimentation standardisées respectivement munies d'une résistance d'identification caractéristique et d'une broche d'identification.

Si ce système apporte l'avantage d'utiliser une unique broche d'identification (en plus des deux broches d'alimentation) pour reconnaître un appareil périphérique (ici une batterie), il présente néammoins des inconvénients. Il exige en effet que l'appareil principal comporte un microcontrôleur et que tous les périphériques soient munis d'une résistance caractéristique d'identification dont la valeur est préprogrammée dans le microcontrôleur. De plus, il nécessite de réserver une broche spécifique d'identification parmi celles disponibles sur le connecteur de l'appareil principal. Or, les connecteurs prévus sur la plupart des appareils de télécommunication sont déjà saturés et la réservation d'une broche d'identification oblige à utiliser des connecteurs dotés d'un plus grand nombre de broches.

Il n'est donc plus possible de connecter de nouveaux périphériques sans augmenter le nombre de broches des connecteurs standards.

Un objet de la présente invention est donc de fournir un appareil de télécommunication muni de moyens pour reconnaître différents types de périphériques par simple connexion dudit périphérique entre la broche d'alimentation et la broche de masse dudit appareil.

Pour cela, un appareil de télécommunication du type mentionné dans le préambule est caractérisé en ce que la signature électrique est constituée par l'impédance dudit périphérique vue entre lesdites bornes d'alimentation.

Selon une caractéristique importante de l'invention, un appareil de télécommunication du type mentionné ci-dessus est remarquable en ce que le dispositif de reconnaissance de périphériques comporte :
- des moyens de mesure de l'impédance du périphérique vue entre lesdites bornes d'alimentation,
- des moyens de sélection automatique d'une tension d'alimentation pour délivrer audit périphérique la tension d'alimentation appropriée en fonction de l'impédance mesurée.

Selon un mode de réalisation préféré de l'invention, lesdits moyens de mesure comportent un générateur de courant faible pour générer un courant de très faible intensité à travers le périphérique connecté entre les bornes d'alimentation et un dispositif de mesure de la tension développée entre lesdites bornes pour déterminer l'impédance dudit périphérique entre ces bornes.

La description suivante, faite en regard des dessins ci-annexés, le tout donné à titre d'exemple non limitatif fera bien comprendre comment l'invention peut être réalisée.

La figure 1 représente un dispositif d' identification de type de batterie selon l'art antérieur.

La figure 2 représente un appareil de télécommmunication selon l'invention.

La figure 3 est un schéma complet d'un dispositif de reconnaissance de périphériques selon un premier mode de réalisation de l'invention mettant en oeuvre des composants discrets.

La figure 4 représente une variante du mode de réalisation de la figure 3.

La figure 5 illustre un deuxième mode de réalisation du dispositif de mesure d'impédance de périphérique selon l'invention.

La figure 6 illustre un troisième mode de réalisation du dispositif de mesure d'impédance selon l'invention.

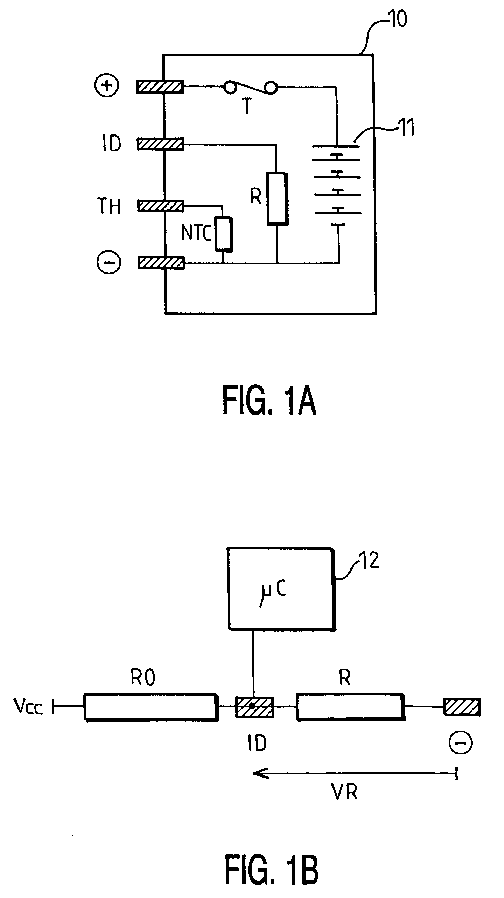

Le dispositif d'identification du type de batterie connu de l'art antérieur, représenté en A à la figure 1 comporte à l'extérieur du boîtier 10, quatre broches de connexion dont une broche "+" pour le potentiel positif, une broche ID d'identification, une broche TH de test de température et une broche "-" pour le potentiel négatif. A l'intérieur du boîtier 10 le dispositif comporte un interrupteur thermique T, une batterie d'alimentation 11, une résistance R caractéristique du type de batterie et une résistance de protection NTC de 10 Kohms environ. La résistance R est connectée entre la borne "-" de la batterie et la broche d'identification ID.

Lors de la connexion du boîtier 10 à un appareil principal, comme représenté en B à la figure 1, la résistance caractéristique R est branchée en série avec une autre résistance R0, à l'intérieur dudit appareil, connectée à un noeud de potentiel constant Vcc. On obtient ainsi un pont diviseur de tension entre la broche "-" et la broche d'identification ID. La tension VR observée entre ces broches, dépendante de la valeur de la résistance R, est appliquée à un port d'entrée d'un microcontrôleur 12 de l'appareil principal pour effectuer la reconnaissance du type de batterie.

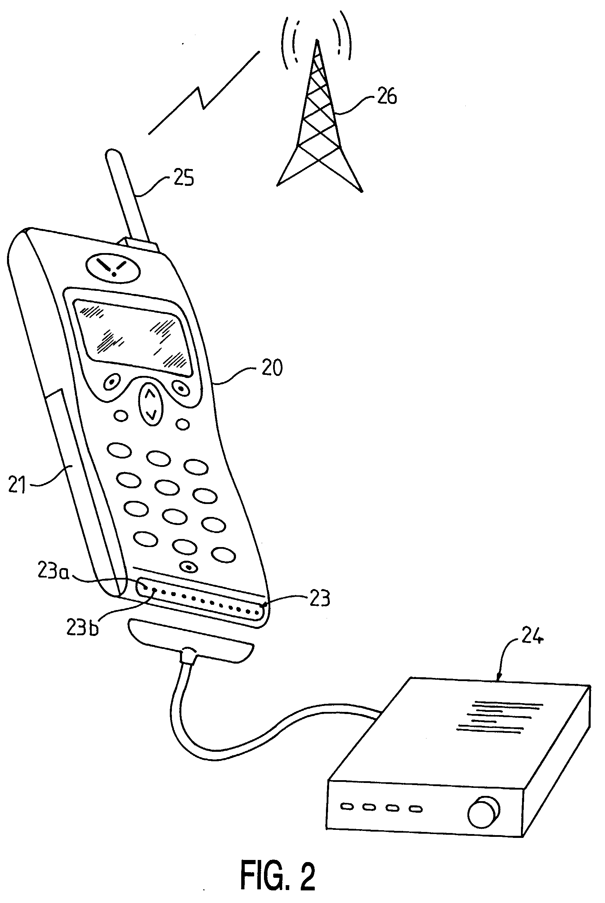

L'appareil principal représenté à la figure 2 est un radiotéléphone, mais le dispositif de reconnaissance de périphérique selon l'invention peut être appliqué à tout autre appareil portable alimenté à partir d'une tension d'alimentation.

Le radiotéléphone 20 comporte un boîtier 21 renfermant une batterie d'alimentation et un dispositif de reconnaissance de périphériques selon l'invention, un connecteur 23 à plusieurs broches de connexion dont une broche d'alimentation 23a et une broche de masse 23b, un appareil périphérique 24 et un dispositif d'émission/réception coopérant avec une antenne 25 pour échanger des signaux radioélectriques avec un site de base 26.

Le dispositif de reconnaissance de périphérique relié à la broche 23a permet, grâce à un dispositif de mesure d'impédance, de détecter et d'identifier le périphérique 24 connecté entre les broches 23a et 23b et grâce à un dispositif de sélection automatique de tension d'alimentation, de lui délivrer la tension d'alimentation adaptée à sa consommation.

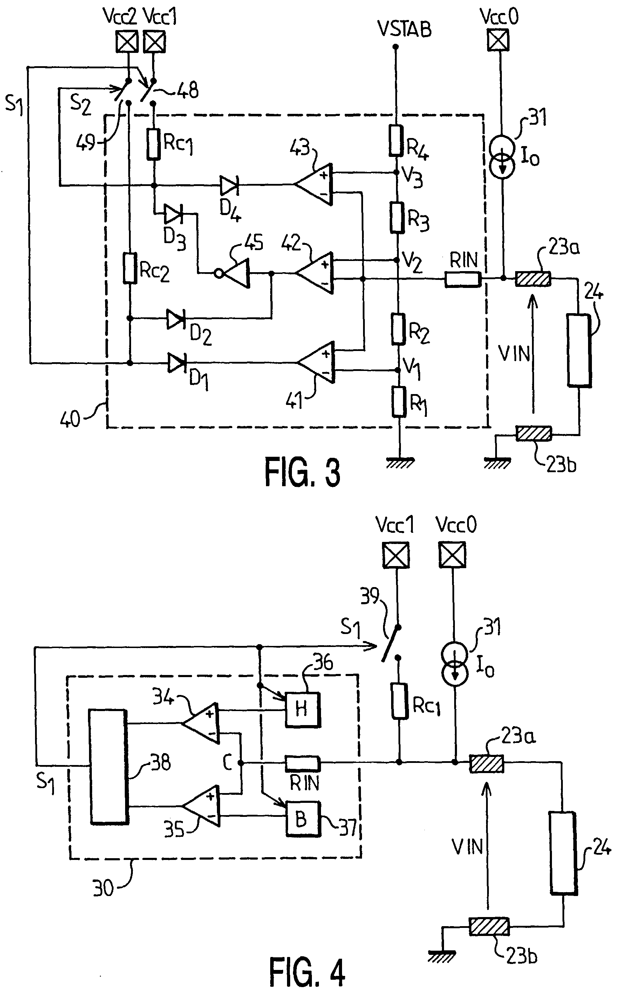

Le principe de l'invention consiste à générer un faible courant à travers le périphérique 24, mesurer la tension à ses bornes, en déduire son impédance (généralement comprise entre 500 Ohms et quelques dizaines de Kohms) puis sa tension d'alimentation. Le schéma de la figure 3 détaille un dispositif de reconnaissance de périphérique mettant en oeuvre les moyens essentiels pour réaliser l'invention dans les cas simples où l'on a un seul périphérique à identifier.

En l'absence de charge entre les bornes d'alimentation 23a et 23b, la tension VIN lue entre ces bornes est celle du générateur imparfait. Lorsqu'un périphérique particulier est connecté, la tension VIN reflétée est analysée à l'aide d'un détecteur à fenêtre 30 pour évaluer l'impédance dudit périphérique entre lesdites bornes.

Un générateur de courant faible 31 connecté entre la broche 23a et un noeud de potentiel Vcc0, envoie un faible courant Iₒ par la broche 23a en destination du périphérique 24, afin que celui-ci développe une tension VIN à ses bornes, caractéristique de son impédance propre. La tension VIN ainsi présente à la broche 23a impose au noeud C, protégé par une résistance RIN, une tension qui est comparée par des comparateurs 34 et 35 à des seuils de tension de référence 36 et 37 représentant respectivement une référence haute (H) et une référence basse (B). En fonction du résultat de la comparaison obtenu à la sortie S1 d'un circuit à logique d'arbitrage 38, un interrupteur à semiconducteur 39 peut être fermé pour sélectionner une tension d'alimentation Vcc1 à travers une résistance de protection Rc1, en direction du périphérique 24 identifié.

Comme le courant destiné à la reconnaissance de l'impédance caractéristique dudit périphérique est de plus faible intensité que le courant d'alimentation normale, une fois le périphérique 24 correctement alimenté, la tension VIN devient supérieure à celle mesurée lors de l'identification. Il est donc impératif de modifier les seuils H et B du détecteur à fenêtre 30 immédiatement après l'identification, afin d'empêcher des oscillations provoquées par les variations de tension VIN pendant l'établissement de l'alimentation.

Afin d'assurer une protection active contre les courts-circuits d'une part, les surcharges et les déconnexions d'autre part, la tension VIN est analysée en permanence et les seuils de détection H et B du détecteur à fenêtre 30 sont ajustés en conséquence. Dans les cas de court-circuits ou de très faible impédance de charge (VIN inférieure au seuil de référence basse) et dans le cas d'une déconnexion du périphérique 24 (VIN supérieure au seuil de référence haute), le dispositif de reconnaissance coupe l'alimentation de la charge. Lorsque VIN se situe entre les deux seuils de référence, il y a maintien de l'alimentation du périphérique.

La figure 4 illustre une variante du mode de réalisation décrit ci-dessus pour reconnaître deux types (Type 1 et Type 2) de périphériques ayant une impédance caractéristique et une tension d'alimentation différentes. Un périphérique de Type 1 est alimenté par une tension Vcc1 via la résistance Rc1 et un interrupteur 48, tandis qu'un périphérique de Type 2 est alimenté par une tension Vcc2 via une résistance Rc2 et un interrupteur 49. Il s'agit ici de détecter quatre situations au lieu des trois précédemment détectées par un détecteur simple 30. Pour résoudre ce problème plus complexe, on utilise le double détecteur à fenêtres 40.

Le dispositif 40 est constitué de trois comparateurs 41, 42, 43, dont une entrée est portée respectivement à des noeuds de potentiel V1, V2 et V3 connectés en série avec des résistances R1, R2, R3 et R4 entre la masse et une tension VSTAB constante. Les sorties des comparateurs entrent dans un circuit à logique combinatoire constitué de diodes D1, D2, D3, D4 et d'un inverseur 45 pour commander les interrupteurs 48 et 49 par les sorties S1 et S2. Le dispositif 40 reconnaît un périphérique lorsque sa tension d'entrée VIN est comprise entre V1 et V3 avec V1 < V2 < V3 < VSTAB. Si VIN < V1 le dispositif 40 détecte un court-circuit au niveau de la charge et coupe l'alimentation pour ne pas endommager l'appareil principal. Si V1 < VIN < V2 le dispositif 40 reconnaît la présence d'un périphérique du Type 1 et si V2 < VIN < V3 il reconnaît un périphérique du Type 2. En revanche, si VIN > V3 le dispositif 40 détecte un circuit ouvert et coupe l'alimentation.

Le tableau suivant résume ces quatre situations définies par les couples ( S1 ; S2 ) en fonction de la tension de charge VIN et des seuils de référence V1, V2 et V3.

| S1 | S2 | VIN | Détection |
|---|---|---|---|
| 0 | 0 | VIN < V1 | court-circuit |
| 1 | 0 | V1 < VIN < V2 | Type 1 |
| 0 | 1 | V2 < VIN < V3 | Type 2 |
| 0 | 0 | VIN > V3 | circuit ouvert |

L'ensemble des éléments nécessaires à ce mode de réalisation est aisément intégrable dans un unique circuit intégré de type ASIC (Application Specific Integrated Circuit) analogique, y compris les interrupteurs de puissance 39, 48, 49 et les résistances de mesure de courant R1, R2, R3, R4. Il est également possible de rendre les seuils de détection V1, V2, V3 et les tensions d'alimentation Vcc1 et Vcc2 programmables à l'aide de composants externes ou de DACs (Digital Analogic Converter) programmables via un bus série 2 ou 3 fils du type IIC ou Microwire afin de rendre le circuit plus universel.

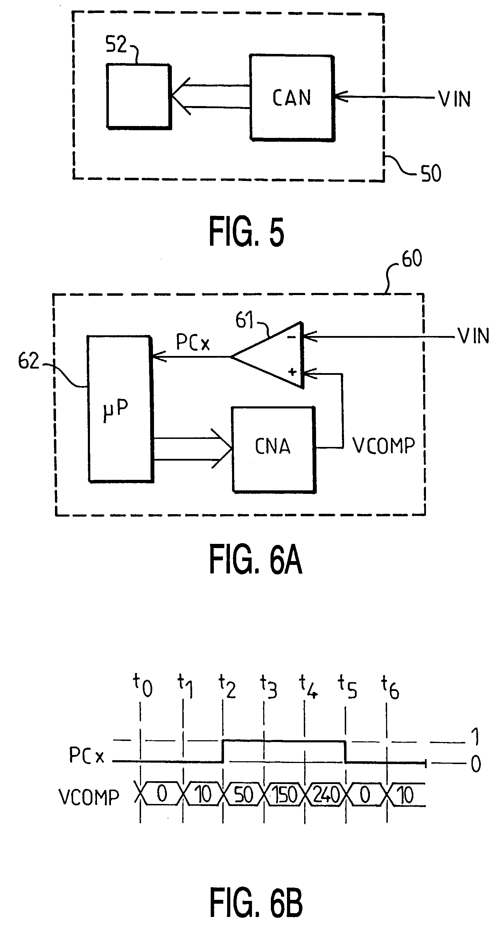

Selon un deuxième mode de réalisation de l'invention, représenté à la figure 5, le dispositif de mesure d'impédance (30,40) peut être avantageusement remplacé par un dispositif 50 constitué d'un Convertisseur Analogique Numérique (CAN) à 8 bits d'information par exemple, coopérant avec un microprocesseur ou une logique d'arbitrage 52 pour reconnaître un plus grand nombre de périphériques.

Le dispositif 50 est particulièrement économique dans le cas d'une application à un radiotéléphone de type GSM (Global System for Mobile telecommunication) ou à tout autre terminal comportant des circuits intégrés complexes dont un microprocesseur et un CAN ayant une entrée libre.

La tension VIN est alors appliquée à l'entrée libre du CAN et en fonction du code sur 8 bits obtenu en sortie du CAN, le composant 52 identifie le type de périphérique placé à l'entrée du dispositif 50. Le tableau suivant donne quelques exemples de valeurs numériques (codes) lues à la sortie du CAN représentant respectivement des fractions de la tension d'entrée VIN mesurée. Par exemple, pour un code de sortie compris entre 10 et 50, la tension VIN mesurée est comprise entre 10/256 Volts et 50/256 Volts ce qui correspond à la détection d'un périphérique de Type 1.

| Code | Détection |
|---|---|
| [ 0 ; 10 ] | Court-circuit |
| [ 10 ; 50 ] | Type 1 |
| [ 50 ; 150 ] | Type 2 |
| [ 150 ; 240 ] | Type 3 |
| [ 240 ; 255 ] | Circuit ouvert |

Un troisième mode de réalisation du dispositif de mesure d'impédance 60 selon l'invention est représenté en A à la figure 6 et comporte un Convertisseur Numérique-Analogique (CNA) ainsi qu'un comparateur 61 et un microprocesseur 62. VIN est appliquée sur l'entrée négative du comparateur 61 alors que son entrée positive est reliée à la sortie Vcomp du CNA dont les entrées sont reliées à des sorties du microprocesseur 62. La tension VIN est comparée à des valeurs de référence calculées par le microprocesseur 62 et converties en tensions Vcomp par le CNA. Le résultat de la comparaison PCx est envoyé en entrée du microprocesseur 62 afin de déterminer si la tension VIN mesurée correspond à un périphérique connu.

La figure 6 montre également en B un chronogramme représentant le niveau de la sortie PCx en fonction de la valeur numérique écrite par le microprocesseur 62 dans le CNA. A l'instant t1 (VCOMP1 = 10/255 et PCx = 0), la tension VIN étant supérieure à VCOMP, le microprocesseur 62 augmente le seuil de référence à détecter. A l'instant t2 (VCOMP2 = 50/255 et PCx = 1), le nouveau seuil de référence a été détecté et a fait basculer le comparateur pour indiquer que VIN < VCOMP2. On en déduit que VCOMP1 < VIN < VCOMP2 et que la charge est d'un type connu.

Pour un nombre N de types de périphériques connus, N + 2 tests de détection sont nécessaires pour identifier le périphérique connecté. Un filtrage logiciel ultérieur de type anti-rebond ou décision majoritaire peut être utile pour éviter une détection erronée lorsque l'on déconnecte un périphérique pour en connecter un autre.

selon une variante de ce mode de réalisation, le convertisseur numérique-analogique peut être avantageusement réalisé par une sortie PWM (Pulse Wide Modulation) d'un compteur (ou timer) rechargé automatiquement. Ce type de compteur est souvent utilisé dans les microcontrôleurs du commerce.

Ainsi, un dispositif de reconnaissance de périphériques économique en terme de broches de connexion et capable d'assurer une protection active contre les courts-circuits, les surcharges et les déconnexions intempestives vient d'être décrit en détails. Bien entendu, l'invention n'est pas limitée aux modes de réalisation proposés à titre d'exemple, d'autres variantes de réalisation de l'invention apparaîtront à l'homme ou la femme de l'art, en particulier pour la réalisation du détecteur à fenêtre(s) (30,40) ou d'un équivalent technique (50,60), ces variantes ne sortant pas du cadre de l'invention.

## Revendications

1. Appareil de télécommunication doté de bornes d'alimentation pour alimenter un périphérique ayant une signature électrique et d'un dispositif de reconnaissance pour reconnaître un périphérique connecté entre les bornes d'alimentation, caractérisé en ce que la signature électrique est constituée par l'impédance dudit périphérique vue entre lesdites bornes.

2. Appareil de télécommunication selon la revendication 1, caractérisé en ce que le dispositif de reconnaissance de périphériques comporte :
- des moyens de mesure de l'impédance du périphérique vue entre les bornes d'alimentation,
- des moyens de sélection automatique d'une tension d'alimentation pour délivrer audit périphérique la tension d'alimentation appropriée en fonction de l'impédance mesurée.

3. Appareil de télécommunication selon l'une des revendications 1 à 3, caractérisé en ce que lesdits moyens de mesure comportent un générateur de courant faible pour générer un faible courant à travers le périphérique connecté entre lesdites bornes et un dispositif de mesure de la tension développée entre les dites bornes pour déterminer l'impédance dudit périphérique entre ces bornes.

4. Appareil de télécommunication selon l'une des revendications 1 à 4, caractérisé en ce qu'il comporte en outre :
- des moyens de comparaison pour comparer l'impédance mesurée à des valeurs de consigne,
- des moyens de commutation pour sélectionner la tension d'alimentation en fonction du résultat de la comparaison.

5. Appareil doté de bornes d'alimentation pour alimenter un périphérique ayant une signature électrique et d'un dispositif de reconnaissance pour reconnaître un périphérique connecté entre les bornes d'alimentation, caractérisé en ce que la signature électrique est constituée par l'impédance dudit périphérique vue entre lesdites bornes.
